# EUROPEAN PATENT SPECIFICATION

(11) **EP 0 822 134 B1**
(45) Date of publication and mention of the grant of the patent: **01.10.2003**
(21) Application number: 97113234.5
(22) Date of filing: 31.07.1997
(51) Int. Cl.: B62M 23/02, B62H 5/00

(54) **Locking mechanism for locking a removable battery container**
Verriegelungsmechanismus zum Verriegeln eines Aufnahmeraumes für eine Batterie
Dispositif de verrouillage pour compartiment de batterie

(30) Priority: 31.07.1996 JP 20163096
(43) Date of publication of application: 04.02.1998
(73) Proprietor: YAMAHA HATSUDOKI KABUSHIKI KAISHA, Iwata-shi Shizuoka-ken, 438 (JP)
(72) Inventor: Ishikawa, Satoshi, Iwata-Shi, Shizuoka 438 (JP)
(74) Representative: Grünecker, Kinkeldey, Stockmair & Schwanhäusser Anwaltssozietät

(56) References cited:
- EP-A- 0 636 536
- EP-A- 0 712 779
- EP-A- 0 715 982

## Description

This invention relates to a locking mechanism for locking a removable battery container, in particular a removable battery container of an electric motor-operated bicycle, comprising a movable means operable by a key and a locking means operable by said movable means.

In recent years, electric motor-operated bicycles have been proposed and put to practical use. Such bicycles inevitably require a battery mounted thereon.

In consideration of convenience when charging the battery, the battery installing structure should be constituted for easy installation and removal. Also. the battery should not stand in the way of the rider when riding and getting off the bicycle.

Some electric motor-operated bicycles are known in which the battery is held in a battery container which in turn is installed removably in the vehicle body. In such bicycles, the battery container is provided with a locking mechanism to prevent the battery from being stolen.

Locking mechanisms of this type are known from EP-A- 0 712 779, EP-A 0 636 536 or EP-A- 0 715 982.

However, the conventional locking mechanism has disadvantages; it requires key operations not only when unlocking and removing the battery but also when installing and locking the battery. At least either of battery installation and removal operations requires use of both hands so the battery cannot be mounted with a single operation, and the removal and installing operations are cumbersome.

Accordingly, it is an objective of the present invention to provide a locking mechanism as indicated above which facilitates with simple technical means a battery container to be easiliy installed preferrably with one hand and without using a key.

According to the present invention this objective is solved for a locking mechanism as indicated above in that in its locked state said locking mechanism is adapted to be temporarily unlocked by said battery container during the installation of said battery container and to be locked again after the completion of the installation of said battery container.

According to an advantageous embodiment of the present invention said movable means is a cylinder and said locking means is a detent for engagement with and disengagement from an engagement means provided on said battery container.

In that case, it is advantageous when said detent is supported for movement relative to said cylinder and is urged in a projecting or locking direction, and that the free or projecting end of said detent is provided with a tapered surface engagable by said battery container during its installation.

In case the removable battery container is for an electric motor-operated bicycle it is advantageous, when said battery container is removably installable in a space surrounded by a seat tube and a rear fender beneath a seat of an electric motor-operated bicycle.

In that case, it is advantageous when said bicycle comprises a wheel lock operable with the key of said locking mechanism, and that said key is only disengageable from said wheel lock when said wheel lock is in its locked state.

Thus, according to an embodiment of the invention, if the locking mechanism is left in the unlocked state after the battery container is removed, the locking mechanism is automatically locked by the installing operation when the battery container is installed again. In other words, the locking mechanism is locked upon completion of the battery installing operation, eliminating the cumbersome key operation and enabling easy, single-handed installation of the battery container.

Furthermore, according to another embodiment of the invention, to draw the key after removing the battery container for charging the battery for example, it is necessary to bring the locking mechanism into the locked state. As a result thereafter the battery container may be installed easily with a single operation in the same manner as that mentioned above and the battery container is securely prevented from being inadvertently left unlocked.

Furthermore, according to a further embodiment of the invention, unless the wheel lock is locked, the key cannot be drawn and the battery cannot be removed. As a result, the electric motor-operated bicycle is prevented from being stolen while the battery is being charged. Also, unless the locking mechanism of the battery container is locked, the key cannot be drawn for locking the wheel lock. As a result, the battery container is securely prevented from being inadvertently left unlocked.

Other preferred embodiments are laid down in further dependent claims.

In the following, the present invention is explained in greater detail with respect to several embodiments thereof in conjunction with the accompanying drawings, wherein:
FIG. 1 is a side view of an electric motor-operated bicycle provided with a locking mechanism of the invention;
FIG. 2 is a partially enlarged view taken along the line A-A in FIG. 1;
FIG. 3 is a side view, partially broken away, of an essential part of the electric motor-operated bicycle, showing the attached state of a battery container;
FIG. 4 is a side view of an essential part of the electric motor-operated bicycle. illustrating installation and removal of the battery container;
FIG. 5 is a cross-sectional side view of the locking mechanism according to the invention;
FIG. 6 is a side view of the locking mechanism;
FIG. 7 is a cross-sectional view showing actions of the locking mechanism in installing and removing the battery container;
FIG. 8 is a cross-sectional view showing actions of the locking mechanism in installing and removing the battery container;
FIG. 9 is a cross-sectional view showing actions of the locking mechanism in installing and removing the battery container;
FIG. 10 is a cross-sectional view showing actions of the locking mechanism in installing and removing the battery container; and
FIG. 11 is a cross-sectional view showing actions of the locking mechanism in installing and removing the battery container.

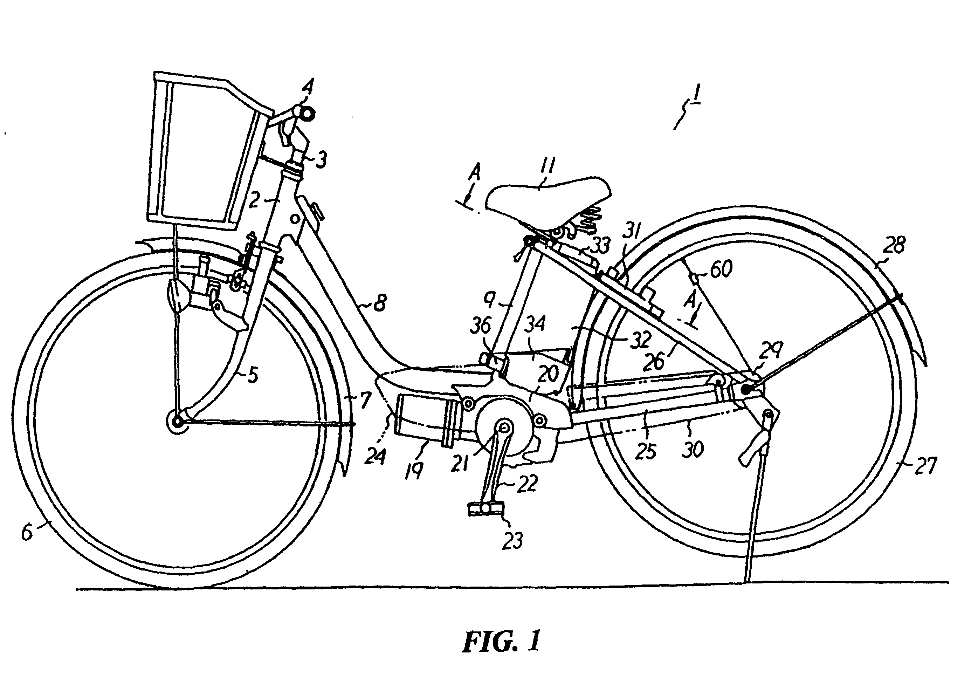

First, the overall constitution of the electric motor-operated bicycle will be described in reference to FIG. 1.

In FIG. are shown; a head pipe 2 located in the front upper part of the vehicle body. A handlebar stem 3 is inserted for free rotation into the head pipe 2. Handiebars 4 are attached to the upper end of the handlebar stem 3. A front fork 5 is attached to the lower end of the handlebar stem 3. A front wheel 6 is attached for free rotation at the lower end of the front fork 5. Part of the front wheel 6 is covered with a front fender 7.

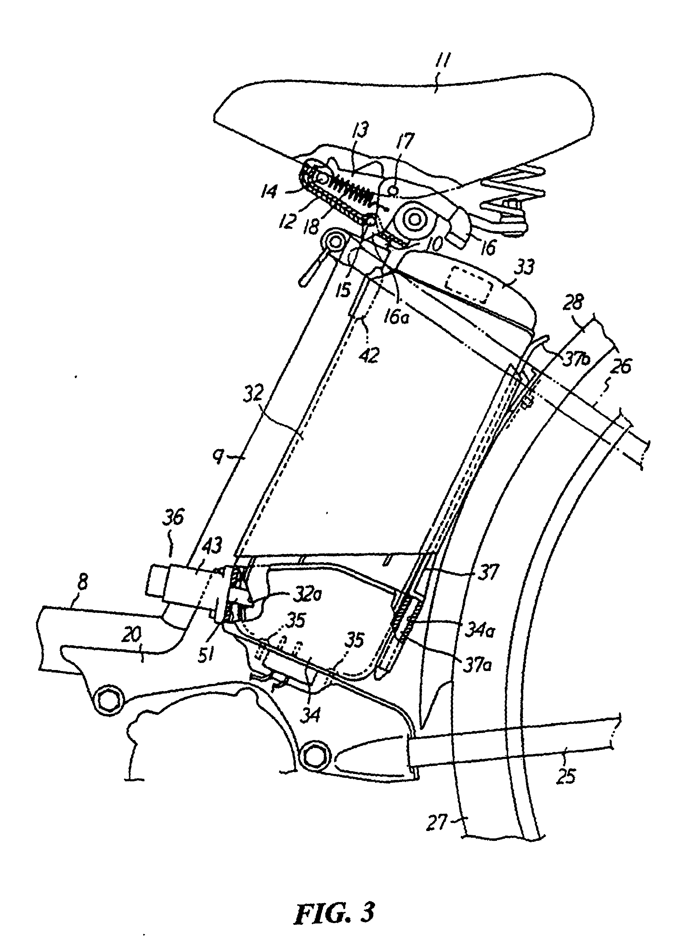

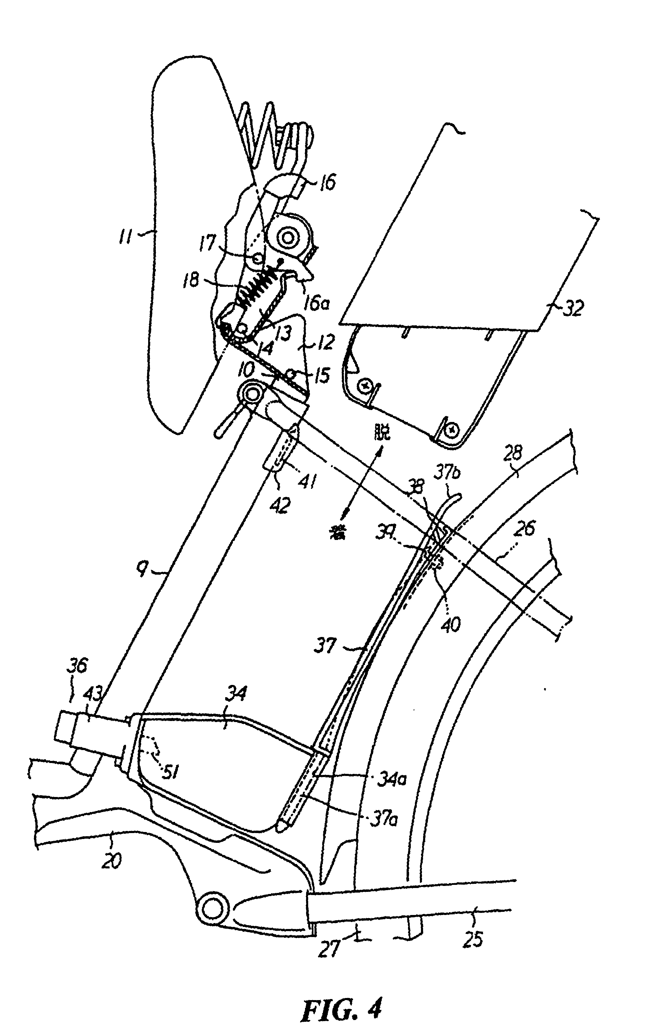

From the head pipe 2, a down tube 8 extends obliquely downward toward the rear of the vehicle body (to the right in FIG. 1). From the generally horizontally extending rear end part of the down tube 8, a seat tube 9 rises with a rearward tilt. A seat post 10 (Refer to FIGs. 3 and 4.) is fit and held in the seat tube 9 for height adjustment. A seat 11 is supported for rotation at the upper end of the seat post 10. Here. the structure for supporting the seat 11 will be described in reference to FIGs. 3 and 4.

To the upper end of the seat post 10 is connected a bracket 12 which supports a hinge member 13 for rotation about a shaft 14 and has a projecting pin 15. To the hinge member 13 is attached an L-shaped lever 16 for rotation about a pivot shaft 17. The lever 16 is forced with a tension spring 18 in one direction.

The seat 11 in normal use is held in a horizontal state as shown in FIG. 3 with a fore-end detent portion 16a of the lever 16 engaging with the pin 15.

As shown in FIG. 1, a power unit 19 is supported through a sheet metal bracket 20 on the down tube 8 and the seat tube 9 in the lower central area of the vehicle body The power unit 19 comprises a human power drive system and an electric motor drive system arranged in parallel. A rotatable crankshaft 21 is supported on the power unit 19. On right and left ends of the crankshaft 21 are attached right and left cranks 22 where pedals 23 are shaft-supported. An area where the down tube 8 and the seat tube 9 are joined together, and parts of the attachment bracket 20 and the power unit 19 are covered with a plastic cover 24.

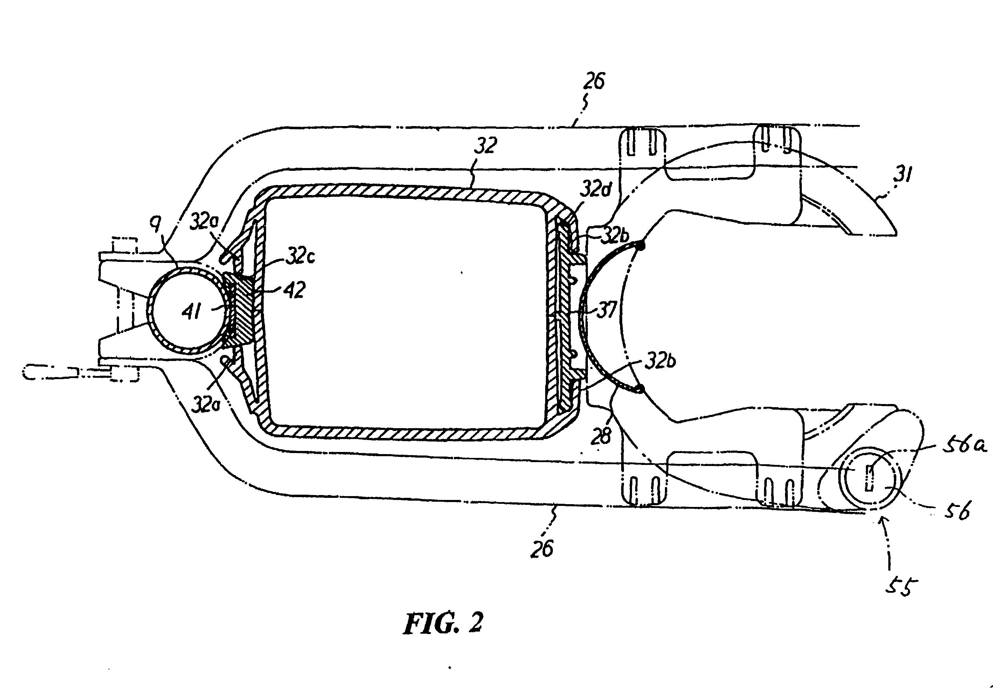

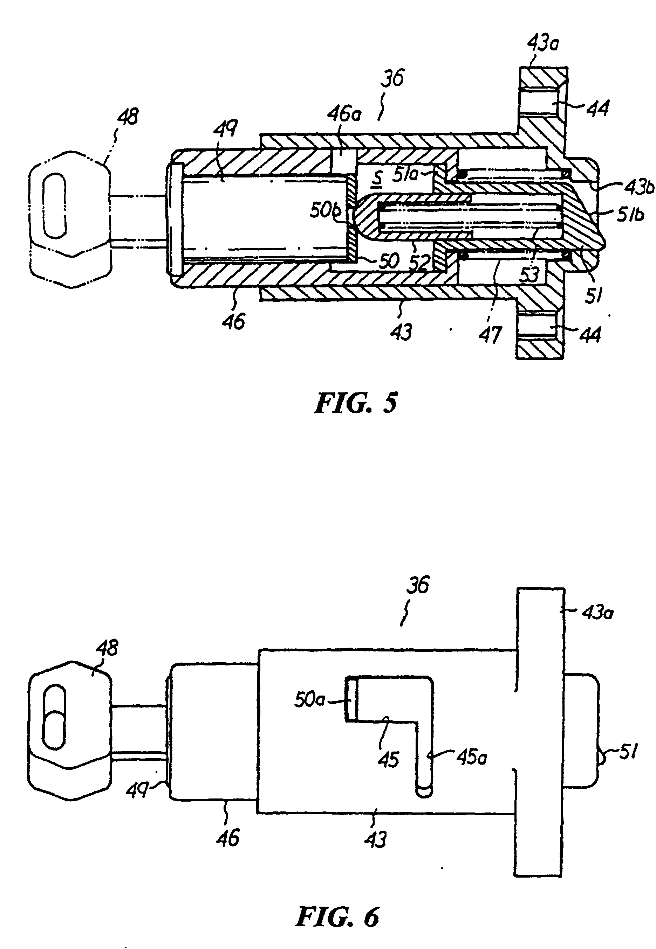

From the attachment bracket 20, paired right and left chain stays 25 extend toward the rear of the vehicle body. The rear ends of the chain stays 25 are connected through paired right and left seat stays 26 to the upper end of the seat tube 9. A rear wheel 27 is supported for rotation at a position where the rear ends of the chain stays 25 are connected to the seat stays 26. Part of the rear wheel 27 is covered with a rear fender 28. The rear wheel 27 is provided with a wheel sprocket 29 associated with a drive sprocket (not shown) provided in the power unit 19 through an endless chain 30 girdling both of the sprockets. In the middle of the seat stays 26 is provided a wheel lock 31 for preventing theft by locking the rotation of the rear wheel 27. As shown in FIG. 2, the wheel lock 31 is provided with a locking mechanism 55 for locking the wheel lock 31. A cylinder 56 of the locking mechanism 55 has a key slot 56a for receiving a key 48 (Refer to FIGs. 5 and 6.) which will be described later.

In the electric motor-operated bicycle 1 of the present embodiment, a battery container 32 is removably installed in the space surrounded with the seat tube 9 and the rear fender 28 under the seat 11.

Now, the structure for installing and removing the battery container 32 will be described in detail below in reference to FIGs. 2 through 7.

As shown in FIG. 2. the battery container 32 comprises two right and left split pieces made of a plastic material joined together to form a single rectangular container 32 containing an Ni-Cd battery (not shown) made up of a plural number of shrink-packed single cells. As shown in FIG. 3. the upper part of the battery container 32 is provided with a handle 33 which may be erected or folded as required. As shown in FIG. 2, the front and rear end surfaces of the battery container 32 are provided with guiding grooves 32c and 32d formed with right and left ribs 32a and 32b running through in the vertical direction.

As shown in FIGs. 3 and 4, a portion of the top surface of the attachment bracket 20 facing the space surrounded with the seat tube 9 and the rear fender 28 is provided with a cup-shaped tray 34 secured with screws 35 screwed from inside the tray 34. The tray 34 is made of a plastic material as a single body. As shown in FIG. 3, part of the lower portion of the battery container 32 is installed in the tray 34.

The front end surface of the tray 34 is provided with a locking mechanism 36. The rear end surface of the tray 34 is provided with an insertion hole 34a running through in the vertical direction with a rectangular cross section elongate in the vehicle width direction. A lower end portion 37a of a guide member 37 of a plate shape having a width in the vehicle width direction formed with a soft plastic material such as polypropylene (PP) is inserted into the insertion hole 34a of the tray 34. The guide member 37 extends obliquely upward from the rear end portion of the tray 34 generally parallel to the seat tube 9 along the front face of the rear fender 28.

As shown in FIG. 4, the guide member 37 has a convex shape with its central portion, with respect to the vehicle width direction, curved forward. The upper end of the guide member 37 is bent toward the rear of the vehicle to form a guiding portion. The upper part of the guide member 37 is secured to the rear fender 28 through a metallic bracket 38 welded to the rear fender 28 using a screw 39 and a nut 40.

As shown in FIGs. 2 and 4, a space is formed behind the seat tube 9 surrounded with the tray 34 on the bottom side, and the seat tube 9 and the guide member 37 on the front and rear sides, and open on both right and left sides and on the top side. As shown in FIG. 3, the battery container 32 is installed in this space. In the state of the battery container 32 being installed as described above, the lower part of the battery container 32 is partially inserted into the tray 34. As shown in FIG. 4, a metallic bracket 41 is welded to the upper rear surface of the seat tube 9. A guide member 42 made of a plastic material is fit into the bracket 41.

Next, detailed constitution of the locking mechanism 36 according to the invention will be described in reference to FIGs. 5 and 6.

The locking mechanism 36 has a cylindrical lock body 43. The outer circumference at one end of the lock body 43 is formed with a flange 43a which is formed with two threaded holes 44. As shown in FIG. 6, an L-shaped engagement slot 45 is formed in the middle (with respect to the axial direction) part of the lock body 43. A cylinder 46 is inserted for sliding in the lock body 43 and urged toward left in FIG. 5 (in the direction of the cylinder 46 projecting from the lock body 43) with a large diameter compression spring 47 disposed between the cylinder 46 and the lock body 43. A cylindrical locking member 49 into which the key 48 is to be inserted is fit in the cylinder 46. As shown in FIG. 5, a space S is defined by the locking member 49 within the cylinder 46.

A planar engage-stop member 50 for interlocked movement with the rotating operation of the key 48 is disposed on the end surface, facing the space S, of the locking member 49. A stopper portion 50a (Refer to FIG. 6.) of the engage-stop member 50 penetrates a slot 46a formed in the cylinder 46 and engages with the above-described engagement slot 45 formed in the lock body 43. As shown in FIG. 5, a round hole 50b is bored in the axial center of the engagement member 50.

A hollow detent 51 capable of sliding out of and into the lock body 43 through an opening 43b at one end of the lock body 43 is housed for sliding in the lock body 43. A flange portion 51a at one end of the detent 51 fits for sliding within the inner circumference of the cylinder 46. The other end of the detent 51 is fit and held for sliding at the opening 43b at one end of the lock body 43, and its end surface is formed as a sloped surface 51b. The detent 51 is forced toward the right as seen in FIG. 5 (in the direction of the detent 51 projecting from the opening 43b of the lock body 43) with a small diameter compression spring 53 interposed between the detent 51 and a spring holder 52. The end of the spring holder 52 is formed in a hemispherical shape for coming into contact with the round hole 50b portion of the engage-stop member 50.

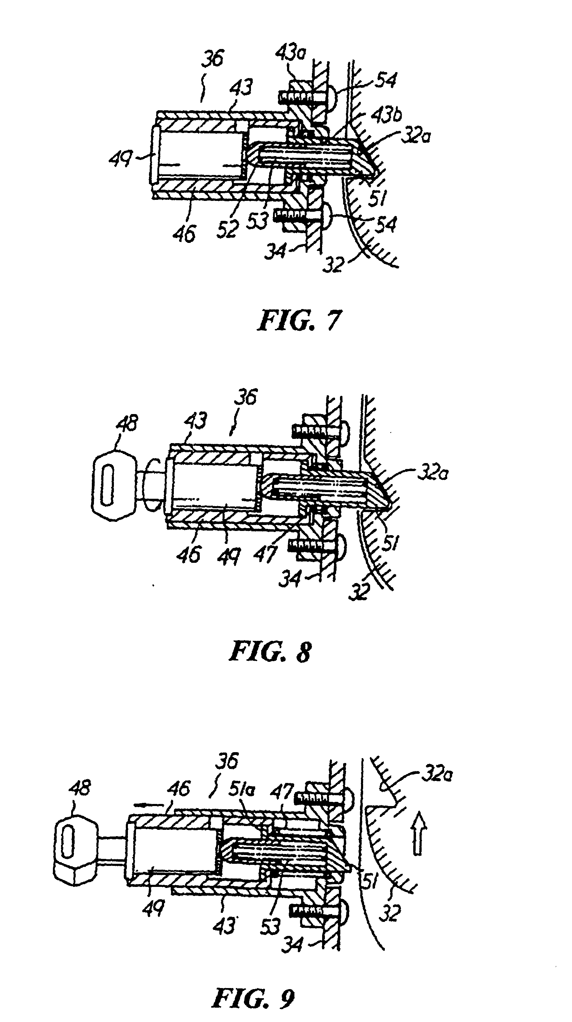

The locking mechanism 36 constituted as described above is attached as shown in FIG. 7 to the front face of the tray 34 with the flange portion 43a of the lock body 43 brought into contact with the front face of the tray 34 with screws 54 penetrating the tray 34 from inside into the threaded holes 44 (Refer to FIG. 5.) formed in the flange portion 43a of the lock body 43. As the detent 51 slides out of and into the tray 34. the detent 51 engages with and disengages from the engagement groove 32a, and the battery container 32 is locked and unlocked with respect to the tray 34.

In the state of the battery container 32 being installed as shown in FIG. 3, the lower part of the battery container 32 is held with the tray 34. At the same time, as shown in FIG. 2, the guide members 42 and 37 fit into the guide grooves 32c and 32d respectively. As shown in FIGs. 3 and 7, in the state of the locking mechanism 36 being locked, the detent 51 engages with the engagement groove 32a of the battery container 32 to hold the battery container 32 in the state of engaging with the tray 34. As a result, the battery container 32 is secured with minimum play and therefore the battery container 32 is effectively prevented from being damaged by vibration.

When the locking mechanism 36 is in the locked state, the cylinder 46 is pushed into the lock body 43, and the detent 51 receives the pressing force of the cylinder 46 through the spring holder 52 and the spring 53. As a result, the detent 51 moves together with the cylinder 46, projects as shown in the drawing from the opening 43b of the lock body 43, engages with the engagement groove 32a of the battery container 32 to lock the installed state of the battery container 32. In this locked state, the stopper portion 50a of the engage-stop member 50 is in engagement with the L-shaped portion 45a of the engagement slot 45.

In order to take out the battery container 32 for charging the battery, first the locking mechanism 36 is unlocked to release the battery container 32 from the installed state. That is to say, as shown in FIG. 8. the key 48 is inserted into the locking member 49 and turned in the direction shown with the arrow. By the way. the key 48 is also used for the wheel lock 31 and cannot be drawn out of the key slot 56a (Refer to FIG. 2.) unless the wheel lock 31 is brought to the locked state.

When the key 48 is turned in the arrow direction in FIG. 8, the engage-stop member 50 turns in the same direction and its stopper portion 50a comes off the L-shaped portion 45a of the engagement slot 45, and so the cylinder 46 is moved and projected from the lock body 43 as shown in FIG. 9 by the resilient force of the spring 47. Then, since the flange portion 51a at one end of the detent 51 forced toward the right in FIG. 9 by the spring 53 is in contact with the cylinder 46, the detent 51 moves together with the cylinder 46 and disengages from the engagement groove 32a of the battery container 32.

Operation of turning the seat 11 forward as shown in FIG. 4 for opening up the space over the battery container 32 either after or before unlocking the above-described locking mechanism 36 is carried out as follows.

That is to say, with the seat 11 in the normal position for use as shown in FIG. 3, when the lever 16 is pushed up against the urging force of the spring 18 to turn the lever 16 about the shaft 17 counterclockwise in FIG. 3, the detent portion 16a at the tip of the lever 16 disengages from the pin 15, permitting the seat 11 together with the hinge member 13 supporting the seat 11 to be turned about the shaft 14 counterclockwise to the position shown in FIG. 4 to open up the space over the battery container 32.

When the locking mechanism 36 is unlocked and the seat 11 is turned forward to open up the space over the battery container 32. the battery container 32 may be easily taken out by pulling up and gripping by hand the handle 33 provided at the top of the battery container 32 and drawing up the battery container 32 along the guide member 37. Here, since the guide groove 32c formed in the front face of the battery container 32 is also in sliding engagement with the guide member 42, the battery container 32 may be smoothly drawn up without rattling.

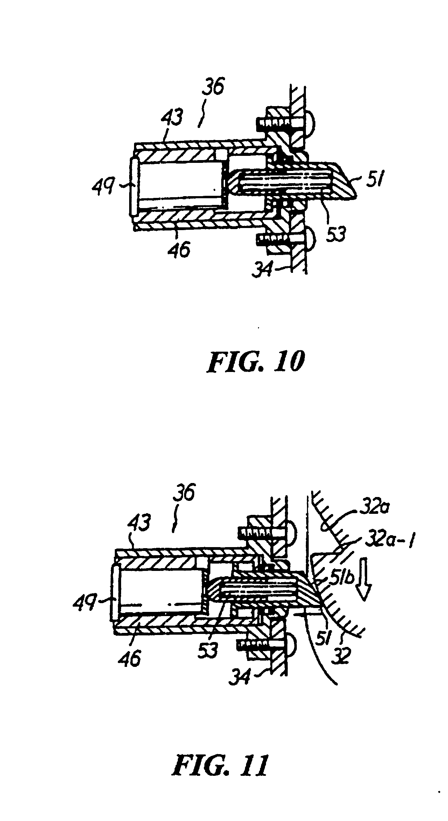

With the present embodiment, the key 48 cannot be drawn out of the locking member 49 when the locking mechanism 36 is in the unlocked state as shown in FIG. 9. Therefore, a user locks the locking mechanism 36 by turning the key 48 after pushing in the cylinder 46 while inserting and holding the key 48 after taking out the battery container 32. This permits the key 48 to be drawn out. Therefore. when the battery container 32 is taken out for charging the battery, the locking mechanism 36 is in the locked state as shown in FIG. 10. In this locked state, the detent 51 may be caused to slide independently against the urging force of the spring 53.

When the battery container 32 is to be replaced after completing charging the battery, in the state shown in FIG. 4, the battery container 32 may be caused to slide down along the guide member 37 to partially fit the lower part of the battery container into the tray 34.

In other words when the battery container 32 is pushed down along the guide member 37 with the rear face of the battery container 32 brought into contact with the upper end guide portion 37b of the guide member 37, the guide grooves 32c and 32d running through along the front and rear faces of the battery container 32 respectively engage with the guide members 42 and 37, and so the battery container 32 may be smoothly pushed down while being guided with the guide members 42 and 37 without rattling.

As shown in FIG. 11, when the lower end portion of the battery container 32 comes into contact with the fore-end sloped surface 51b of the detent 51 of the locking mechanism 36, the detent 51 which may be caused to slide independently against the urging force of the spring 53 as described above is slid to the left in FIG. 11 as the detent 51 receives a leftward force from the battery container 32 because of a wedge effect. As a result, the locking mechanism 36 is temporarily brought to the unlocked state and the inserting operation of the battery container 32 is carried on. At the point where the bottom surface 32a-1 of the engagement groove 32a of the battery container 32 passes the bottom surface of the detent 51, the force acting on the detent is removed and so the detent 51 is pushed back to the original position by the urging force of the spring 53 and engages with the engagement groove 32a of the battery container 32 as shown. Thus. the locking mechanism 36 is again in the locked state in which the battery container 32 is locked in the state of being inserted in the tray 34.

With the present embodiment, as shown in FIG. 11. the locking mechanism 36 in the locked state is temporarily brought to the unlocked state and then again to the locked state by simply installing the battery container 32 without any operation of the locking mechanism 36. In other words, the battery container 32 may be installed without using the key 48. namely the operation of installing the battery container 32 is significantly simplified as it is installed by a single hand.

Also with the present embodiment, the key 48 cannot be drawn out unless the locking mechanism 36 is locked after taking out the battery container 32 for charging the battery. Therefore, the battery container 32 is securely prevented from being inadvertently left unlocked after the battery container 32 is installed by a single hand as described above.

Furthermore with the present embodiment, unless the wheel lock :31 is locked, the key 48 cannot be drawn out and so the battery container 32 cannot be taken out. As a result, the electric motor-operated bicycle 1 is prevented from being stolen during battery charging. Also. unless the locking mechanism 36 of the battery container 32 is locked, the key 48 cannot be drawn out and used to unlock the wheel lock 31. As a result, the battery container 32 is securely prevented from being inadvertently left unlocked.

By the way, the vehicle speed of the electric motor-operated bicycle 1 may be accurately detected for example by detecting the revolution of the rear wheel 27 by detecting the magnetism of a magnet 60 attached to a spoke of the rear wheel 27 as shown in FIG. 1, by means of a sensor (not shown) built in the wheel lock 31.

While an example of applying the locking mechanism to the removable battery container mounted specifically on the electric motor-operated bicycle is described above, this invention may be applied to any other removable battery containers.

As described above, according to the invention, the locking mechanism for the removable battery container comprises the cylinder which may be moved within the key body by the key operation, and the detent to engage with and disengage from the engagement groove formed in the battery container as the detent projects from and retracts into the key body along with the movement of the cylinder. The detent is supported for movement relative to the cylinder and resiliently forced toward the projecting direction. Because the fore-end of the detent is formed with the sloped surface, the locking mechanism in the locked state is temporarily brought to the unlocked state in the process of the battery container being installed. and again brought back to the locked state upon completion of installing the battery container. Thus. an effect is attained that the battery container may be installed using only a single hand without using the key.

## Claims

1. A locking mechanism (36) for locking a removable battery container (32), in particular a removable battery container (32) of an electric motor-operated bicycle (1), comprising a movable means (46) operable by a key (48) and a locking means (51) operable by said movable means (46), **characterized in that** in its locked state said locking mechanism (36) is adapted to be temporarily unlocked by said battery container (32) during the installation of said battery container (32) and to be locked again after the completion of the installation of said battery container (32).

2. A locking mechanism according to claim 1, **characterized in that** said movable means is a cylinder (46) and said locking means is a detent (51) for engagement with and disengagement from an engagement means (32a) provided on said battery container (32).

3. A locking mechanism according to claim 2, **characterized in that** said detent (51) is supported for movement relative to said cylinder (46) and is urged in a projecting or locking direction, and that the free or projecting end of said detent (51) is provided with a tapered surface (51b) engagable by said battery container (32) during its installation.

4. A locking mechanism according to at least one of the preceding claims 1 to 3, **characterized in that** said key (48) is only extractable in the locked state of said locking mechanism (36).

5. A locking mechanism according to at least one of the preceding claims 1 to 4, **characterized in that** said locking mechanism (36) is disposed on a tray (34) which holds and supports said battery container (32).

6. A locking mechanism according to at least one of the preceding claims 2 to 5, **characterized in that** said cylinder (46) is slidably received in a lock body (43), that said detent (51) is slidably received in said lock body (43) as well as in said cylinder (46) such that said detent (51) is adapted to be pushed into said cylinder (46) at least in the locked state of said locking mechanism (36).

7. A locking mechanism according to at least one of the preceding claims 3 to 6, **characterized in that** said detent (51) is urged by a spring means (53) towards the projecting direction.

8. A locking mechanism according to at least one of the preceding claims 2 to 7, **characterized in that** the end of said detent (51) received in said cylinder (46) is provided with a flange portion (51 a) engagable with a respective flange of said cylinder (46), said cylinder (46) being provided with a locking member (49) such that there is a space (S) within said cylinder (46) between the inner end of said locking member (49) and said flange of the cylinder (46).

9. A locking mechanism according to at least one of the preceding claims 1 to 8, **characterized in that** said battery container (32) comprising a handle (33).

10. A locking mechanism according to at least one of the preceding claims 1 to 9, **characterized in that** said battery container (32) is removably installable in a space surrounded by a seat tube (9) and a rear fender (28) beneath a seat (11) of an electric motor-operated bicycle (1).

11. A locking mechanism according to claim 10, **characterized in that** said rear fender (28) comprising a guide member (37) for slidingly receiving said battery container (36).

12. A locking mechanism according to claim 10 or 11, **characterized in that** said battery container (32) comprising two halves of plastic material joined together to form a single, rectangular container accommodating a plurality of single battery cells.

13. A locking mechanism according to at least one of the preceding claims 10 to 12, **characterized in that** said seat (11) being releasably connected to said seat tube (9) such that said seat (11) is pivotable after releasing said connection.

14. A locking mechanism according to at least one of the preceding claims 10 to 13, **characterized in that** said bicycle (1) comprising a wheel lock (31) operable with the key (48) of said locking mechanism (36) and that said key (48) is only disengageable from said wheel lock (31) when said wheel lock (31) is in its locked state.

## Patentansprüche

1. Verriegelungsvorrichtung (36) zum Verriegeln eines entfernbaren Batteriebehälters (32), insbesondere eines entfernbaren Batteriebehälters (32) eines elektromotor- betätigten Fahrrades (1), mit einer bewegbaren Einrichtung (46), betätigbar durch einen Schlüssel (48), und einer Verriegelungseinrichtung (51), betätigbar durch die bewegbare Einrichtung (46), **dadurch gekennzeichnet, dass** in ihrem verriegelten Zustand die Verriegelungsvorrichtung (36) vorgesehen ist, zeitweilig durch den Batteriebehälter (32) während der Installation des Batteriebehälters (32) unverriegelt zu sein und nach der Vervollständigung der Installation des Batteriebehälters (32) wieder verriegelt zu werden.

2. Verriegelungsvorrichtung nach Anspruch 1, **dadurch gekennzeichnet, dass** die bewegbare Einrichtung (46) ein Zylinder (46) ist und die Verriegelungseinrichtung eine Arretierung (51) zum Eingriff mit oder zum Lösen von einer Eingriffseinrichtung (32a), vorgesehen an dem Batteriebehälter (32), ist.

3. Verriegelungsvorrichtung nach Anspruch 2, **dadurch gekennzeichnet, dass** die Verriegelung (51) zur Bewegung relativ zu dem Zylinder (46) gelagert ist und in eine vorspringende oder Verriegelungsrichtung gedrängt wird und dass das freie oder vorspringende Ende der Arretierung (51) mit einer geneigten Oberfläche (51b), eingreifbar durch den Batteriebehälter (32) während seiner Installation mit diesem in Eingriff bringbar, versehen ist.

4. Verriegelungsvorrichtung nach zumindest einem der vorhergehenden Ansprüche 1 bis 3, **dadurch gekennzeichnet, dass** der Schlüssel (48) nur in dem verriegelten Zustand der Verriegelungsvorrichtung (36) abziehbar ist.

5. Verriegelungsvorrichtung nach zumindest einem der vorhergehenden Ansprüche 1 bis 4, **dadurch gekennzeichnet, dass** die Verriegelungsvorrichtung (36) auf einer Schale (34), die den Batteriebehälter (32) hält und lagert, angeordnet ist.

6. Verriegelungsvorrichtung nach zumindest einem der vorhergehenden Ansprüche 2 bis 5, **dadurch gekennzeichnet, dass** der Zylinder (46) in einem Verriegelungskörper (43) gleitbar aufgenommen ist, dass die Arretierung (51) in dem Verriegelungskörper (43) ebenso wie in dem Zylinder (46) derart gleitbar aufgenommen ist, dass die Arretierung (51) vorgesehen ist, zumindest in dem verriegelten Zustand der Verriegelungsvorrichtung (36) in den Zylinder (46) gedrückt zu werden.

7. Verriegelungsvorrichtung nach zumindest einem der vorhergehenden Ansprüche 3 bis 6, **dadurch gekennzeichnet, dass** die Arretierung (51) durch eine Federeinrichtung (53) in Richtung der vorspringenden Richtung gedrängt wird.

8. Verriegelungsvorrichtung nach zumindest einem der vorhergehenden Ansprüche 2 bis 7, **dadurch gekennzeichnet, dass** das Ende der Arretierung (51), aufgenommen in dem Zylinder (46), mit einem Flanschabschnitt (51a), eingreifbar mit einem jeweiligen Flansch des Zylinders (46), versehen ist, wobei der Zylinder (46) mit einem Verriegelungsteil (49) derart versehen ist, dass es einen Raum (S) innerhalb des Zylinders (46) zwischen dem inneren Ende des Verriegelungsteiles (49) und des Flansches des Zylinders (46) gibt.

9. Verriegelungsvorrichtung nach zumindest einem der vorhergehenden Ansprüche 1 bis 8, **dadurch gekennzeichnet, dass** der Batteriebehälter (32) einen Handgriff (33) aufweist.

10. Verriegelungsvorrichtung nach zumindest einem der vorhergehenden Ansprüche 1 bis 9, **dadurch gekennzeichnet, dass** der Batteriebehälter (32) in einem Raum, umgeben durch ein Sitzrohr (9) und ein hinteres Schutzblech (28) unterhalb eines Sitzes (11) eines elektromotor- betätigten Fahrrades (1), entfembar installierbar ist.

11. Verriegelungsvorrichtung nach Anspruch 10, **dadurch gekennzeichnet, dass** das hintere Schutzblech (28) ein Führungsteil (37) zum gleitenden Aufnehmen des Batteriebehälters (32) aufweist.

12. Verriegelungsvorrichtung nach Anspruch 10 oder 11, **dadurch gekennzeichnet, dass** der Batteriebehälter (32) zwei Hälften aus Kunststoffmaterial, die miteinander verbunden sind, aufweist, um einen einzigen rechteckigen Behälter zu bilden, der eine Mehrzahl von einzelnen Batteriezellen aufnimmt, aufweist.

13. Verriegelungsvorrichtung nach zumindest einem der vorhergehenden Ansprüche 10 bis 12, **dadurch gekennzeichnet, dass** der Sitz (11) lösbar mit dem Sitzrohr (9)derart verbunden ist, dass der Sitz (11) nach dem Lösen der Verbindung schwenkbar ist.

14. Verriegelungsvorrichtung nach zumindest einem der vorhergehenden Ansprüche 10 bis 13, **dadurch gekennzeichnet, dass** das Fahrrad (1) eine Radsperre (31), betätigbar mit dem Schlüssel (48) der Verriegelungsvorrichtung (36), aufweist, und dass der Schlüssel (48) der Verriegelungsvorrichtung (36) nur von der Radsperre (31) abziehbar ist, wenn die Radsperre (31) in ihrem verriegelten Zustand ist.

## Revendications

1. Mécanisme de verrouillage (36) destiné à verrouiller un compartiment à batterie amovible (32), en particulier un compartiment à batterie amovible (32) d'une bicyclette (1) actionnée par un moteur électrique, comprenant des moyens mobiles (46) pouvant être actionnés par une clé (48) et des moyens de verrouillage (51) pouvant être actionnés par lesdits moyens mobiles (46), **caractérisé en ce que**, dans son état de verrouillage, ledit mécanisme de verrouillage (36) est adapté pour être déverrouillé temporairement par ledit compartiment à batterie (32) au cours de l'installation dudit compartiment à batterie (32) et pour être à nouveau verrouillé une fois achevée l'installation dudit compartiment à batterie (32).

2. Mécanisme de verrouillage selon la revendication 1, **caractérisé en ce que** lesdits moyens mobiles sont un cylindre (46) et **en ce que** lesdits moyens de verrouillage sont un cliquet (51) destiné à s'engager avec des moyens d'engagement (32a), et à se dégager de ceux-ci, aménagés sur ledit compartiment à batterie (32).

3. Mécanisme de verrouillage selon la revendication 2, **caractérisé en ce que** ledit cliquet (51) est supporté afin de se déplacer par rapport au dit cylindre (46) et qu'il est poussé dans une direction de saillie ou de verrouillage, et **en ce que** l'extrémité libre ou en saillie dudit cliquet (51) comporte une surface conique (51b) qui peut s'engager avec ledit compartiment à batterie (32) au cours de son installation.

4. Mécanisme de verrouillage selon au moins l'une des revendications précédentes 1 à 3, **caractérisé en ce que** ladite clé (48) peut être retirée uniquement dans l'état de verrouillage dudit mécanisme de verrouillage (36).

5. Mécanisme de verrouillage selon au moins l'une des revendications précédentes 1 à 4, **caractérisé en ce que** ledit mécanisme de verrouillage (36) est disposé sur une cuvette (34) qui maintient et supporte ledit compartiment à batterie (32).

6. Mécanisme de verrouillage selon au moins l'une des revendications précédentes 2 à 5, **caractérisé en ce que** ledit cylindre (46) est reçu en coulissement dans un corps de verrou (43), **en ce que** ledit cliquet (51) est reçu en coulissement dans ledit corps de verrou (43) de même que dans ledit cylindre (46), de sorte que ledit cliquet (51) est adapté pour être poussé à l'intérieur dudit cylindre (46) au moins dans l'état de verrouillage dudit mécanisme de verrouillage (36).

7. Mécanisme de verrouillage selon au moins l'une des revendications précédentes 3 à 6, **caractérisé en ce que** ledit cliquet (51) est poussé par des moyens de ressort (53) vers la direction de saillie.

8. Mécanisme de verrouillage selon au moins l'une des revendications précédentes 2 à 7, **caractérisé en ce que** l'extrémité dudit cliquet (51) reçu dans ledit cylindre (46) comporte une partie de bride (51a) qui peut s'engager avec une bride respective dudit cylindre (46), ledit cylindre (46) comportant un élément de verrouillage (49) de telle sorte qu'il existe un espace (S) à l'intérieur dudit cylindre (46) entre l'extrémité interne dudit élément de verrouillage (49) et ladite bride du cylindre (46).

9. Mécanisme de verrouillage selon au moins l'une des revendications précédentes 1 à 8, **caractérisé en ce que** ledit compartiment à batterie (32) comprend une poignée (33).

10. Mécanisme de verrouillage selon au moins l'une des revendications précédentes 1 à 9, **caractérisé en ce que** ledit compartiment à batterie (32) peut être installé de manière amovible dans un espace entouré par un tube de selle (9) et par un garde-boue arrière (28) en dessous d'une selle (11) d'une bicyclette actionnée par un moteur électrique (1).

11. Mécanisme de verrouillage selon la revendication 10, **caractérisé en ce que** ledit garde-boue arrière (28) comprend un élément de guidage (37) destiné à recevoir en coulissement ledit compartiment à batterie (36).

12. Mécanisme de verrouillage selon les revendications 10 ou 11, **caractérisé en ce que** ledit compartiment à batterie (32) se compose de deux moitiés en matière plastique reliées ensemble, afin de former un compartiment unique rectangulaire pouvant loger une pluralité d'éléments uniques de batterie.

13. Mécanisme de verrouillage selon au moins l'une des revendications précédentes 10 à 12, **caractérisé en ce que** ladite selle (11) est connectée de manière amovible sur ledit tube de selle (9) de telle sorte que ladite selle (11) peut pivoter une fois que ladite connexion a été libérée.

14. Mécanisme de verrouillage selon au moins l'une des revendications précédentes 10 à 13, **caractérisé en ce que** ladite bicyclette (1) comprend un verrou de roue (31) qui peut être actionné à l'aide de la clé (48) dudit mécanisme de verrouillage (36), et **en ce que** ladite clé (48) peut être retirée dudit verrou de roue (31) uniquement lorsque ledit verrou de roue (31) se trouve dans son état de verrouillage.
